# EUROPEAN PATENT APPLICATION

(11) **EP 4 730 084 A1**
(43) Date of publication of application: **22.04.2026**
(21) Application number: 24306732.9
(22) Date of filing: 17.10.2024
(51) Int. Cl.: G06F 3/01, G06F 3/02

(54) **NEURAL HAPTIC FIELDS: IMPLICIT NEURAL REPRESENTATION OF HAPTIC DATA**

(71) Applicant: InterDigital CE Patent Holdings, SAS, 75017 Paris (FR)
(72) Inventor: LECUYER, Gurvan, 35000 RENNES (FR); OUAALOUHOUM, Oumaima, 20440 CASABLANCA (MA); GALVANE, Quentin, 35235 THORIGNE-FOUILLARD (FR)
(74) Representative: Interdigital

(57) **Abstract**

In an example haptic rendering method, an implicit neural representation model of haptic data is obtained. An interaction input to the model, and an interaction output is obtained from the model, where the interaction output representing a value of at least one haptic parameter.

## Description

### BACKGROUND

The present disclosure is related to haptics formats, MPEG standards, tactile internet, and digital humans.

Implicit Neural Representations (INR) is an emerging technology with many use cases. Fundamentally, the method works by overfitting the weights of a neural network on a specific dataset to implicitly encode the data. It has been used for the encoding and rendering of 3D scenes based using only 2D images.

Haptic data is a combination of multiple modalities, such as friction, temperature, vibration, etc. Tactile data may be used to represent tactile surfaces. These surfaces are usually represented as 2D textures and can be used to generate tactile feedback. For synthetic data, the generated haptic feedback is formed using specific signals, periodic or structured noise. Real world data is usually captured through the exploration of real-world surfaces, either in a controlled pattern using robots or through tracked random exploration of the surface. This type of data is often complicated to work with and usually converted to 2D maps.

There are many rendering techniques for tactile feedback, such as Surface Haptic Object (SHO) and Surface Haptic Texture (SHT), which are the two main existing techniques for tactile rendering relying on the finger velocity and position. Hybrid methods have also been proposed to use both techniques to store and render 2D haptic textures. The taxel representation for instance allows mapping of different periodic signals to different locations on a texture.

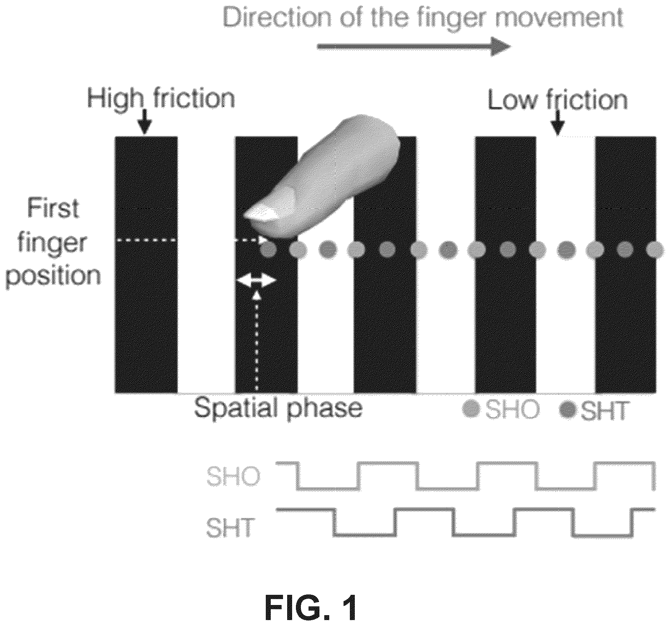

FIG. 1 illustrates SHO an SHT used for rending of haptic textures.

### SUMMARY

A method according to some embodiments comprises: obtaining an implicit neural representation model of haptic data; providing an interaction input to the model; and obtaining an interaction output of the model, the interaction output representing a value of at least one haptic parameter. The interaction input may include one or more of: a position parameter, a direction parameter, a pressure parameter, or a speed parameter. The interaction output parameter may include one or more of: a friction parameter, a temperature parameter, or a vibration parameter.

A method according to some embodiments comprises: selecting a plurality of paths over a surface; selecting a plurality of sample points within each of the plurality of paths, each sample point having at least one corresponding training input parameter; determining a value of at least one corresponding haptic parameter at each of the sample points along the respective paths; and training an implicit neural representation model using the training input parameters as inputs and the corresponding haptic parameters as outputs. The training input parameter may include one or more of: a position parameter, a direction parameter, a pressure parameter, or a speed parameter. The haptic parameter may include one or more of: a friction parameter, a temperature parameter, or a vibration parameter.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 schematically illustrates an SHO and SHT representation of a haptic effect.
FIG. 2 is a schematic illustration of the use of an implicit neural representation of haptic data according to some embodiments.
FIG. 3 schematically illustrates direction-sensitivity of haptic properties of an anisotropic surface.
FIGs. 4A-4D illustrate collection of training data for an implicit neural representation of haptic data according to some embodiments.
FIGs. 5A-6C illustrate collection of training data for an implicit neural representation of haptic data according to some embodiments.
FIGs. 6A-6C illustrate friction textures of synthetic surfaces that may be used for model training in some embodiments.
FIGs. 7A-7B illustrate training data (7A) and results (7B) for implicit neural representations of a marble texture using different architectures according to example embodiments.
FIGs. 8A-8B illustrate training data (8A) and results (8B) for implicit neural representations of a wood texture using different architectures according to example embodiments.
FIGs. 9A-9B illustrate training data (9A) and results (8B) for implicit neural representations of a cloud texture using different architectures according to example embodiments.
FIG. 10 illustrates a visual reconstruction of the texture was performed through consecutive inferences on the texture according to example embodiments.
FIG. 11 is a functional block diagram illustrating an apparatus or system on which some embodiments may be implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

The present disclosure describes the use of implicit haptic fields. Implicit Haptic Field refers to the concept of implicitly representing haptic feedback in tactile surfaces. Example embodiments use Multi Layers Perceptron models (MLPs) and overfit them with the haptic texture to encode the friction signal.

Existing techniques for storing and rendering haptic data present many issues. First, they lack precision in terms of the quality of the rendered signals, as well as their adaptability to the given texture. For example, the SHO technique is more suitable for sparse surfaces, whereas the SHT technique gives better results while working with dense tactile surfaces. Most of the existing methods also focus on 1D textures. Even the taxel representation is based on 1D periodic signals. Additionally, the rendering of 2D textures is limited by the resolution of the image. It calls for storing potentially very high-resolution textures and running a dedicated rendering algorithm to generate the haptic signal associated with a trajectory on the texture. Storing haptic data with a 2D texture is also fundamentally limiting as the haptic data associated to a pixel in such a technique is the same no matter the interaction parameters. In reality, friction for instance does not only depend on the position on the texture, but it may also change depending on the pressure or the speed of the interaction. This type of haptic information is not captured by existing models.

Example embodiments provide an approach to encoding tactile feedback for various different types of tactile textures using implicit neural representations, making it possible to capture various fine and complex details that are present in haptic surfaces.

Example embodiments make use of haptic fields. A haptic field is a space containing haptic information for one or more modalities. The exploration of the haptic fields results in the synthesis of the associated haptic signal.

This disclosure describes neural haptic fields, which use implicit neural networks to encode haptic data. Here we focus on the encoding of tactile information from a surface. We present a new approach to encode tactile feedback for all types of tactile textures using INR and capable of capturing the fine and complex details that are present in haptic surfaces.

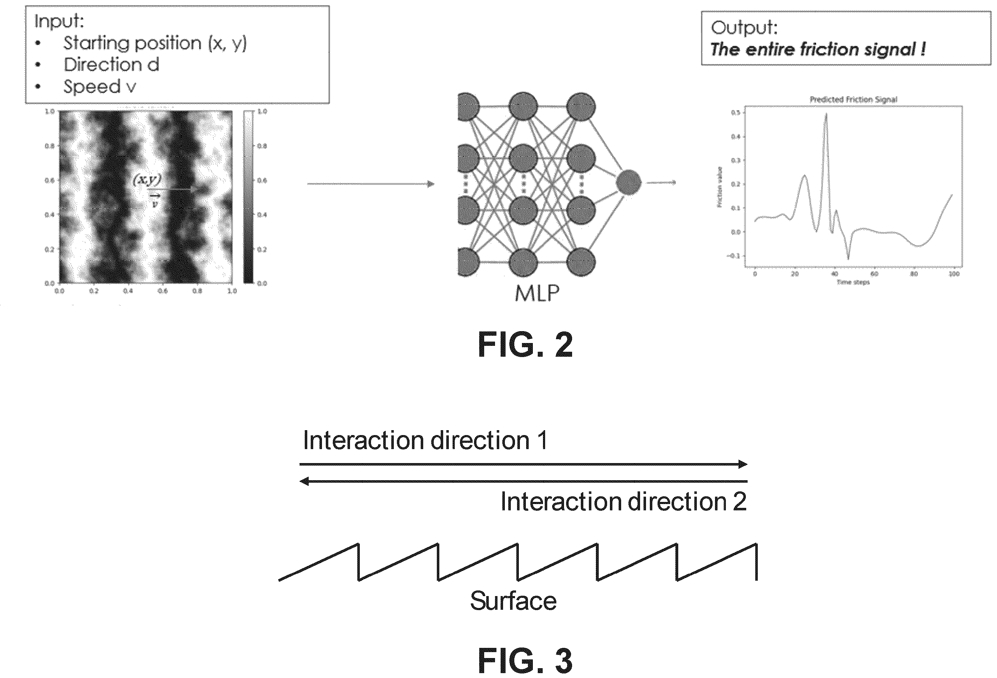

Example embodiments use multi layers perceptron models (MLPs) to overfit haptic data associated to a texture. The objective is not to simply encode the value associated to the pixels of the texture but rather to implicitly encode the haptic signals associated to interactions with the texture. In other words, given a set of interaction parameters, the model is able to output not just a single sample, but the signal associated with the interaction as illustrated in FIG. 2 for a friction texture. In our proposed implementation of the model, the input interaction parameters include a starting point, a direction, a speed and a duration (i.e. the number of samples to output, the duration was fixed in our implementation). This set of parameters could be extended to include other parameters such as the pressure, the area of contact or other parameters that may affect the output signal.

As illustrated in FIG. 2, an example model takes as input a set of interaction parameters and directly outputs the associated signal.

Example embodiments allow for the encoding of haptic signals from a given tactile surface. Such embodiments allow for capturing more information than a single texture. When rendering haptic data based on a single 2D texture, the output only depends on the value of the haptic data at the position of the interaction on the texture. With the use of example embodiments, in contrast, the output may vary based on other interaction parameters. For instance, the rendering of haptic data for anisotropic surfaces is not conventionally feasible from a single 2D haptic texture. As illustrated in FIG. 3, for anisotropic surfaces, the perceived friction should be different based on the direction of the interaction. In the example of FIG. 3, the rendered friction should be greater when touching the surface along direction 2 than direction 1. Thus, if the haptic data is stored as a 2D texture, part of the friction data may be lost if only a single friction value is associated with a given position. Example embodiments on the other hand implicitly encode this information and allow for the rendering haptic data appropriately based on the interaction parameters, including the direction and speed.

Example embodiments make use of neural haptic fields. Such embodiments encode haptic surfaces with haptic fields parameterized by deep neural networks. The encoding of a haptic surface in such embodiments may include sampling points along trajectories on the surface.

Given a dataset of sampled trajectories, each associated with interaction parameters (starting point, direction, speed, etc.), overfitting is performed of a deep neural network that will parameterize the haptic field. Once the model has converged, the haptic feedback produced by an interaction may be predicted through a simple inference of the model.

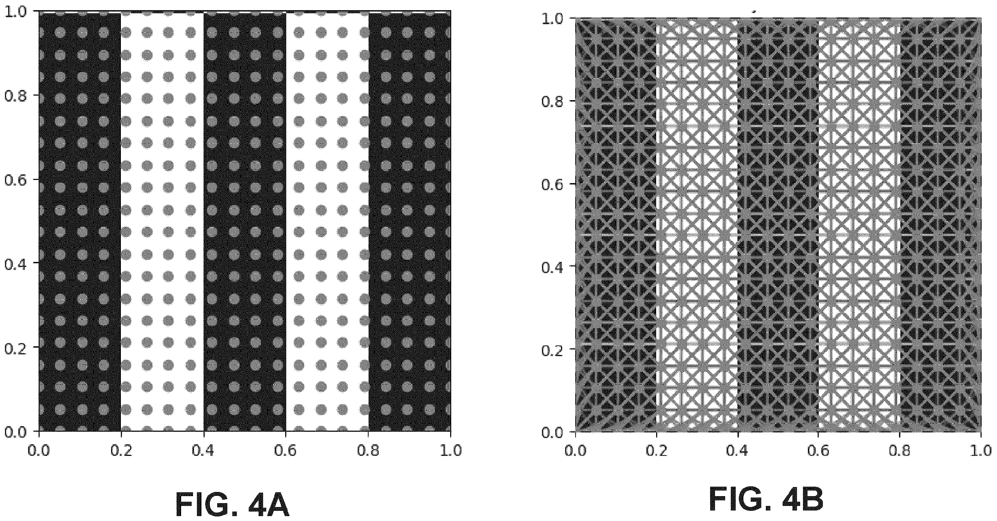

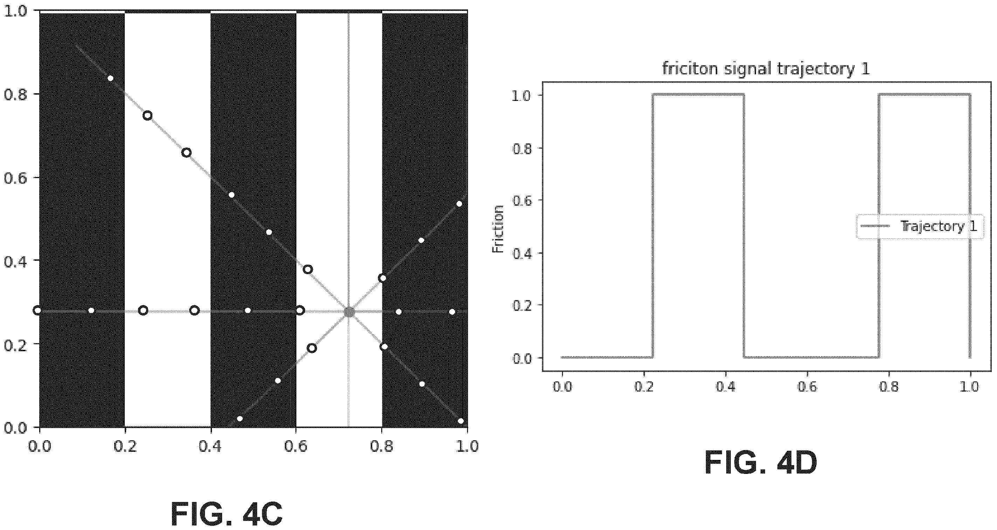

In an example embodiment, each input of the dataset used to train the model contains a list of interaction parameters (starting point, direction, speed, duration, and the like) and the haptic values of each of the samples of the trajectory. This dataset of sample trajectories may be generated in different ways. The selected technique may depend on the type of raw data available. For synthetic data stored as 2D textures, any solution could be used. For real data, the method may vary depending on how the raw data is stored. FIGs. 4A-4D illustrates one example of strategy for sampling the surface. First the starting points of the trajectories are uniformly distributed over the surface, as represented by the dots in FIG. 4A. For each starting point, several trajectories are generated in different directions, as illustrated by the lines emanating from the dots in FIG. 4B. These trajectories can then be sampled. The dots in FIG. 4C illustrates samples collected along different trajectories. FIG. 4D is a graph illustrating a resulting friction signal along a single trajectory. This type of strategy may be used with a synthetic dataset, or it may be used to capture real data in a controlled environment. For instance, a robot arm equipped with haptic sensors may be used to record both the interaction parameters and haptic data.

Alternative techniques may also be used to generate a training dataset. For instance, other sampling strategies may be used for defining the starting points. The different starting points may be selected using different distribution functions (e.g. random, gaussian, etc.) or based on based on properties of the surface itself (e.g. gradient of the haptic values on the surface). Analogous selection techniques may be used for the direction, the speed and the duration parameters.

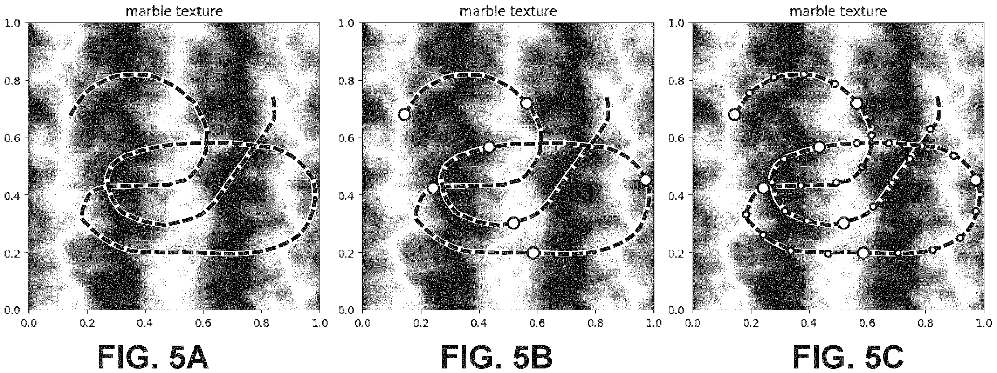

Some embodiments collect training data from pre-stored datasets providing haptic data associated to different surfaces. The strategy for generating the training dataset for example embodiments may be adapted to match the nature of the raw data. For instance, in some datasets, the haptic data may have been captured using a haptic sensor attached to a tracked finger randomly moving on the surface. FIGs. 5A-5C illustrate a process that may be used to generate the dataset with such data for the training of a neural haptic field. The trajectory may be split in small segments, each with a starting point and a set of subsequent samples. As illustrated in FIG. 5A, the haptic surface may be traversed by a random trajectory. As illustrated in FIG. 5B, the trajectory may be split in sub-trajectories, each with a starting point represented by a circle. As illustrated in FIG. 5C, subsequent samples may be collected along the sub-trajectories, with the subsequent sample locations being represented by the small dots.

Embodiments of the present disclosure may be implemented with different types of neural network architectures. Various different types of MLP may be used for this task.

Example embodiments have been implemented with three different architectures. One embodiment was implemented using SIREN, an MLP with sin activations that showed very good results in cases where the friction texture is defined by periodic functions. The SIREN model is described for example in Sitzmann, V., et al., "Implicit neural representations with periodic activation functions," Advances in neural information processing systems, 33, pp. 7462-7473 (2020).

A second embodiment was implemented using a basic MLP with Rectified Linear Unit (ReLU) activations, as described in Mildenhall, B., et al. "Nerf: Representing scenes as neural radiance fields for view synthesis," Communications of the ACM, Vol. 65. 99-106 (2021).

A third embodiment was implemented using the Instant NGP model, as described in Müller, T., et al. "Instant neural graphics primitives with a multiresolution hash encoding", ACM transactions on graphics (TOG), Vol. 41. 1-15 (2022), which makes use of an additional task called hash encoding for helping the model capture finer and more complex details. Here, the hash encoding was performed on each sample of the trajectories. For all three implementations, positional encoding was also used to better encode the high frequencies of the signal. For training, several loss functions were tested, including Mean Squared Error (MSE) and Binary Cross Entropy (BCE). The MSE loss function was found to give the best results.

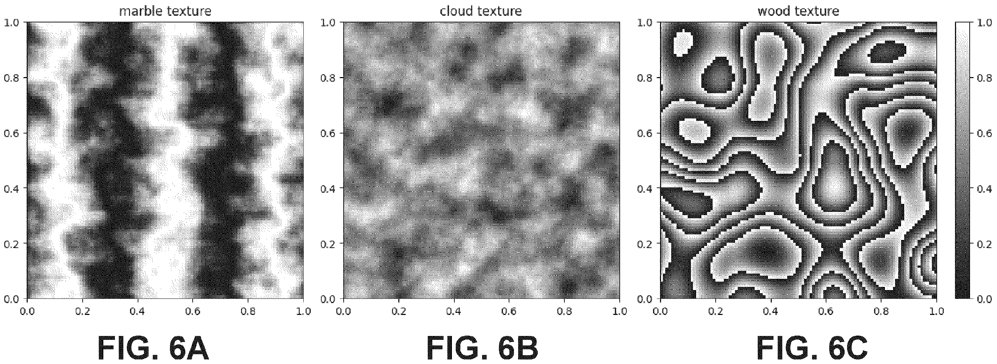

The example embodiments were tested on synthetic friction textures with different types of surface as illustrated in FIGs. 6A-6C. FIG. 6A illustrates synthetic friction textures for marble. FIG. 6B illustrates a synthetic cloud friction texture. FIG. 6C illustrates a synthetic friction wood texture. The datasets were produced using the method detailed in FIGs. 4A-4D using with the parameters detailed in Table 1. The duration parameter for each trajectory was fixed and set to 10 (other values were tested and can be used in other embodiments, but 10 gave the best results).

**Table 1: Dataset used for the training of Neural Haptic Fields**

| **Datasets used** | **Starting Point Sampling** | **Number of directions** | **Train ratio (80%)** | **Test ratio (20%)** |
|---|---|---|---|---|
| Wood texture | 80*80 | 8 | 40960 | 10240 |
| Cloud texture | 80*80 | 8 | 40960 | 10240 |
| Marble texture | 80*80 | 8 | 40960 | 10240 |

The results of the different models are detailed in Table 2. The architecture based on InstantNGP with the hash encoding was found to produce the best results, though different architectures can be used in different embodiments.

**Table 2: Results of the three architectures used to implement the Neural Haptic Fields model**

| **Model** | **PSNR train** | **PSNR test** | **Training time** | **Inference time** |
|---|---|---|---|---|
| SIREN | 30.19 | 24.12 | 3.5 hours | 0.1-0.5 milliseconds |
| MLP ReLu | 39.19 | 30.55 | 1.5 - 2 hours | 0.05 - 0.1 milliseconds |
| MLP + Hash encoding | 57.15 | 33.79 | 1- 1.5 hours | 0.01-0.1 milliseconds |

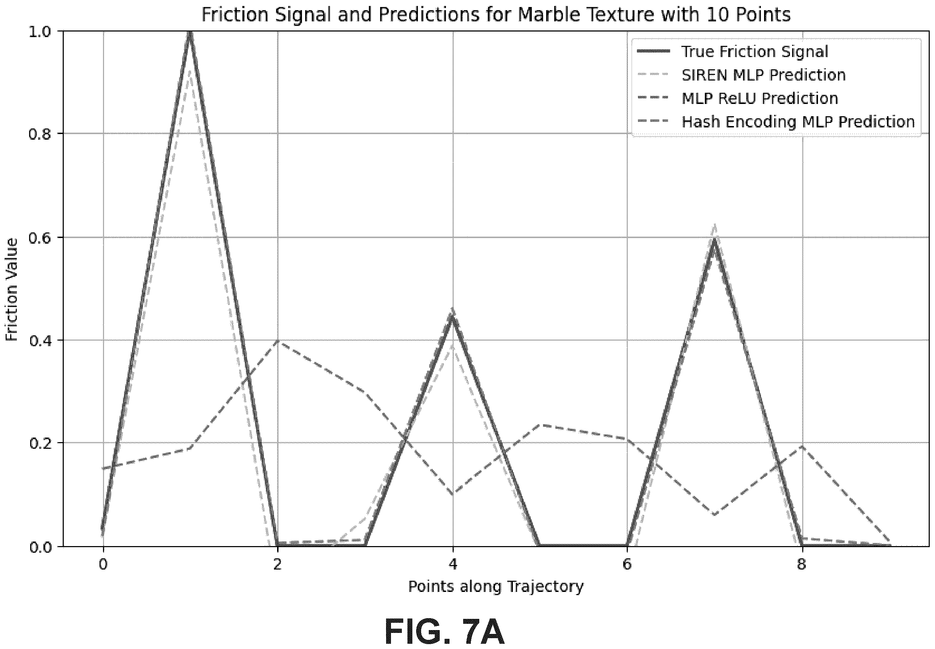

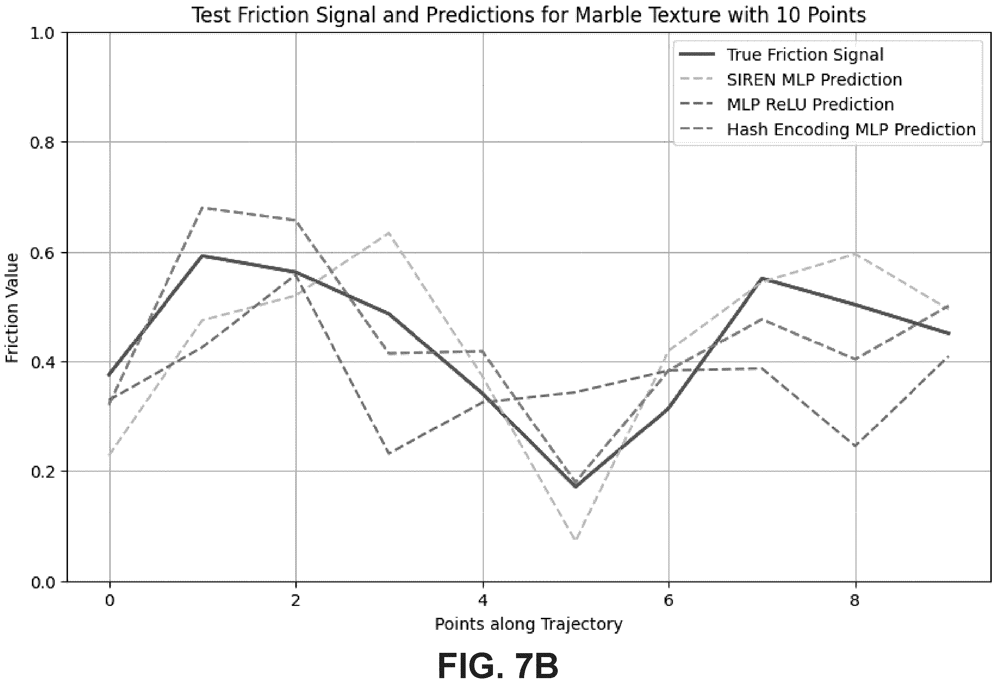

Examples of generated trajectories on both the training and test sets for the different textures are illustrated in FIGs. 7-9.

FIG. 7A illustrates a training set including friction signal and predictions for a marble texture with 10 points. FIG. 7B illustrates a test set including friction signal and predictions for a marble texture with 10 points.

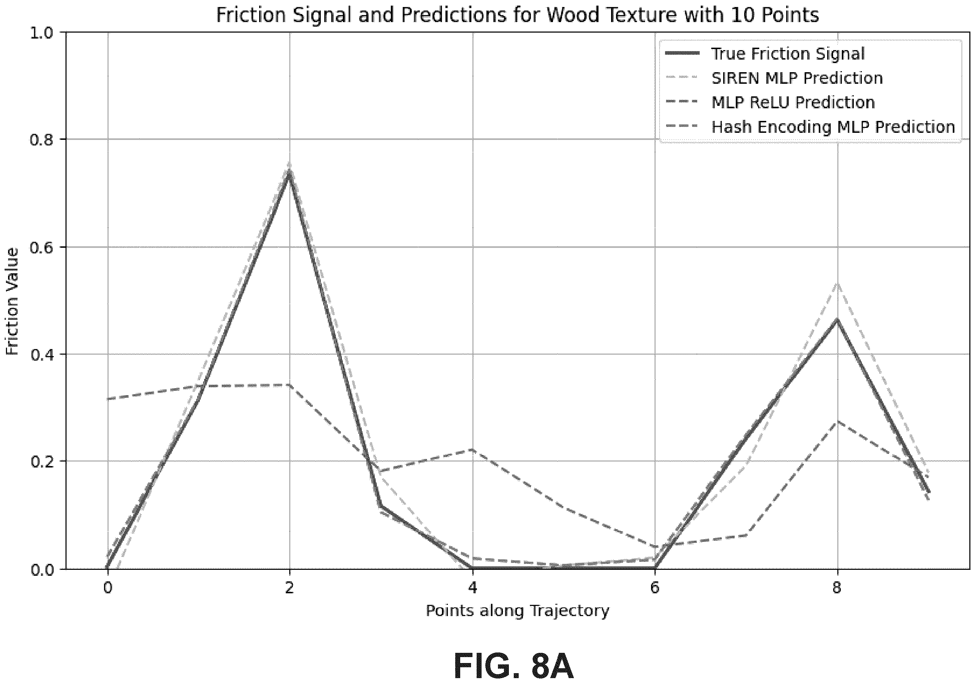

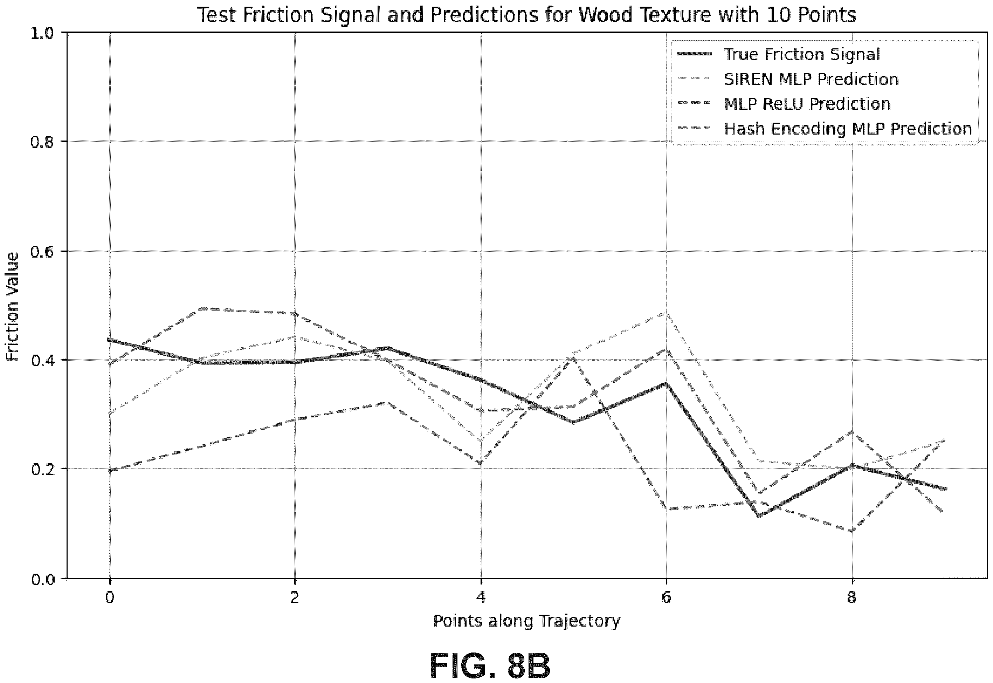

FIG. 8A illustrates a training set including friction signal and predictions for a wood texture with 10 points. FIG. 8B illustrates a test set including friction signal and predictions for a wood texture with 10 points.

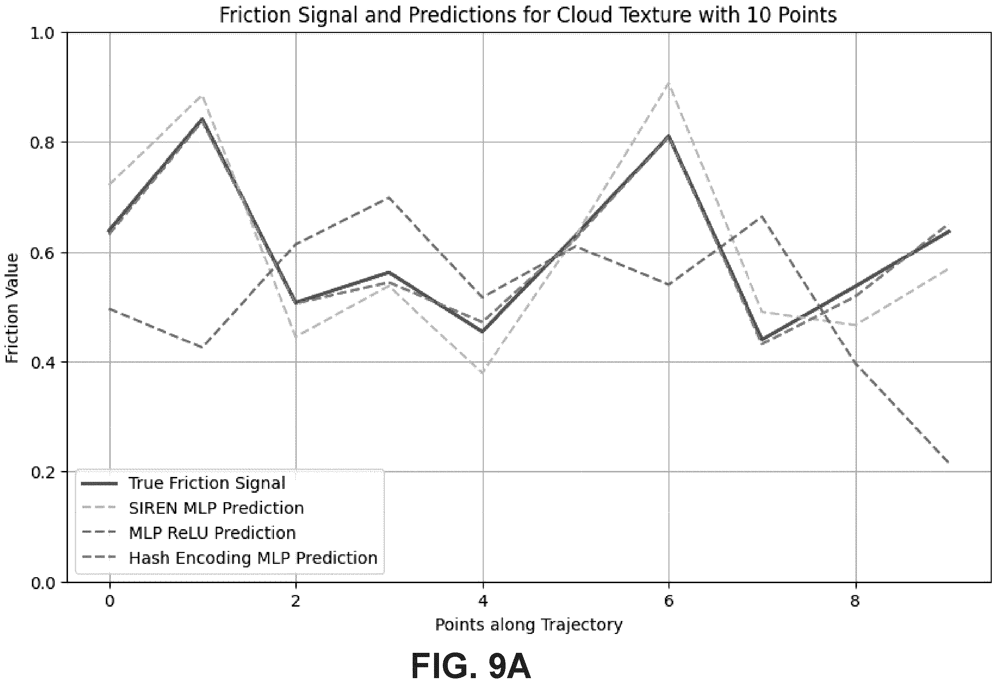

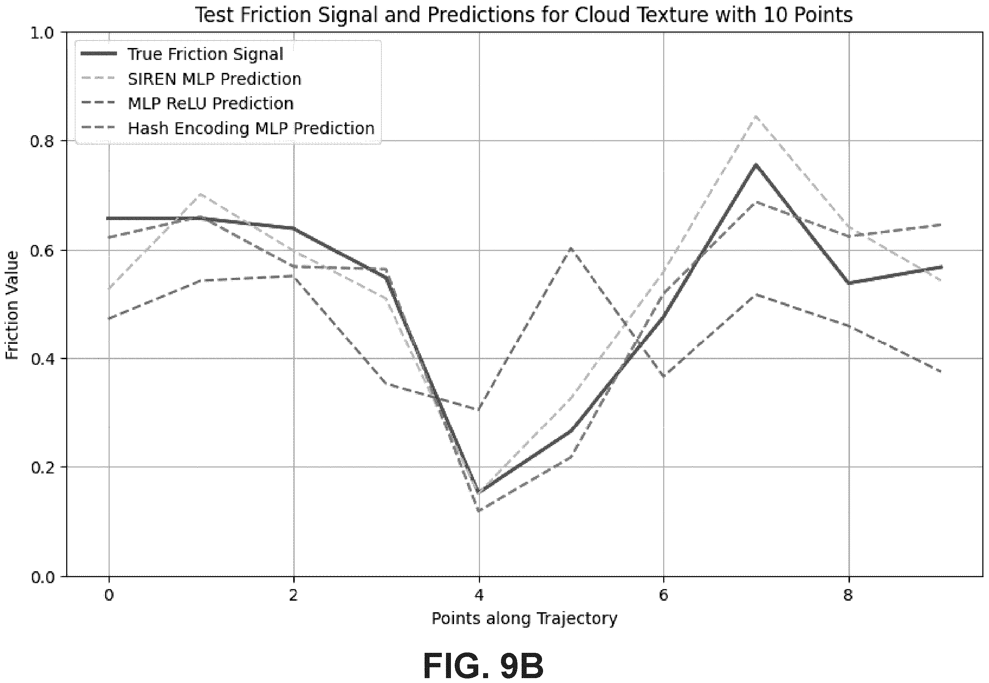

FIG. 9A illustrates a training set including friction signal and predictions for a cloud texture with 10 points. FIG. 9B illustrates a test set including friction signal and predictions for a cloud texture with 10 points.

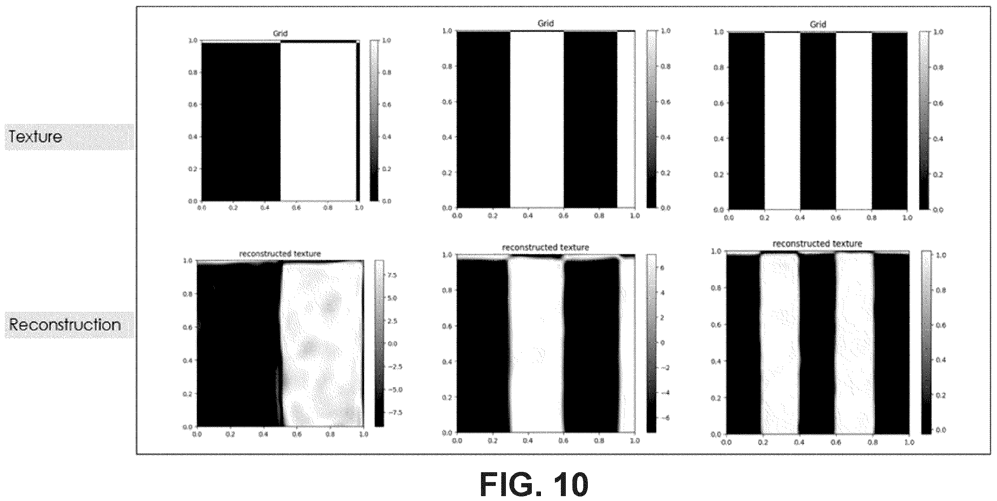

Using an example embodiment, a visual reconstruction of the texture was performed through consecutive inferences on the texture. The results are shown in FIG. 10.

A method according to some embodiments comprises: obtaining an implicit neural representation model of haptic data; providing an interaction input to the model; and obtaining an interaction output of the model, the interaction output representing a value of at least one haptic parameter.

The interaction input parameter may include one or more of: a position parameter, a direction parameter, a pressure parameter, or a speed parameter. The interaction output parameter may include one or more of: a friction parameter, a temperature parameter, or a vibration parameter.

In some embodiments, the implicit neural representation model is trained on a pulrality of samples, each sample having at least one training input parameter and at least one training output parameter. The training input parameter may include one or more of: a position parameter, a direction parameter, a pressure parameter, or a speed parameter. The training output parameter may include one or more of: a friction parameter, a temperature parameter, or a vibration parameter.

Some embodiments further comprise rendering a haptic effect according to the interaction output parameter.

In some embodiments, the model is implemented on a multi layer perceptron.

A method according to some embodiments comprises: selecting a plurality of paths over a surface; selecting a plurality of sample points within each of the plurality of paths, each sample point having at least one corresponding training input parameter; determining a value of at least one corresponding haptic parameter at each of the sample points along the respective paths; and training an implicit neural representation model using the training input parameters as inputs and the corresponding haptic parameters as outputs. The training input parameter may include one or more of: a position parameter, a direction parameter, a pressure parameter, or a speed parameter. The haptic parameter may include one or more of: a friction parameter, a temperature parameter, or a vibration parameter.

In some embodiments, the surface is a real surface, and the values of the haptic parameter are determined by measurements on the real surface.

In some embodiments, the surface is a synthetic surface, and the values of the haptic parameter are calculated from information describing the synthetic surface.

Some embodiments include an apparatus comprising one or more processors configured to perform any of the methods described herein.

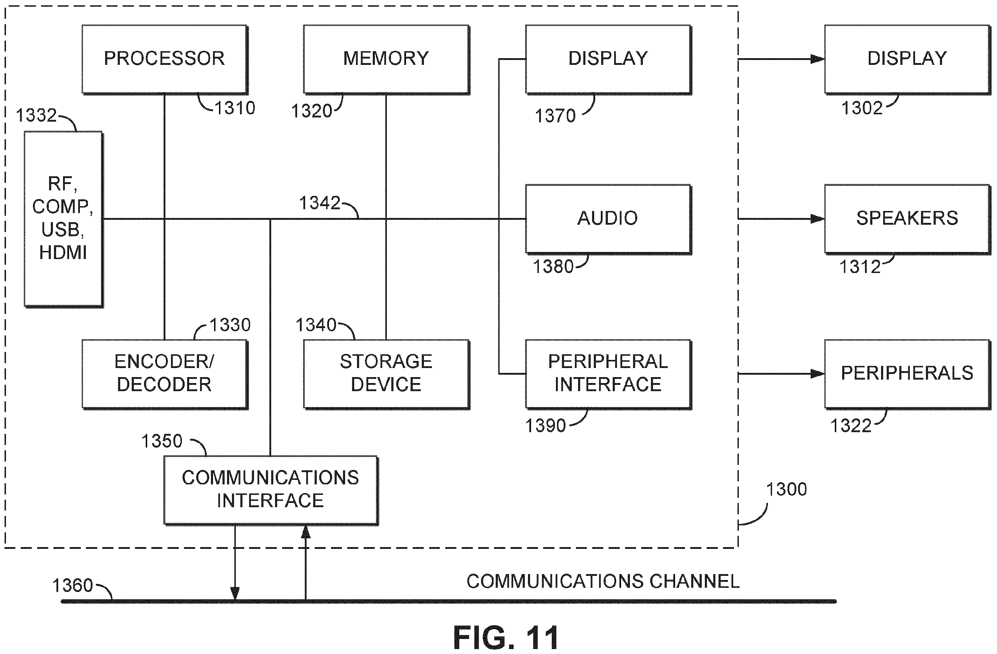

Some embodiments may be implemented on a system of one or more processors as illustrated in FIG. 11. FIG. 11 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining an implicit neural representation model of haptic data;
providing an interaction input to the model; and
obtaining an interaction output of the model, the interaction output representing a value of at least one haptic parameter.

2. The method of claim 1, wherein the implicit neural representation model is trained on a pulrality of samples, each sample having at least one training input parameter and at least one training output parameter.

3. The method of claim 2, wherein the training input parameter includes one or more of: a position parameter, a direction parameter, a pressure parameter, or a speed parameter.

4. The method of claim 2 or 3, wherein the training output parameter includes one or more of:
a friction parameter, a temperature parameter, or a vibration parameter.

5. The method of any of claims 1-4, wherein the interaction input parameter includes one or more of: a position parameter, a direction parameter, a pressure parameter, or a speed parameter.

6. The method of any of claims 1-5, wherein the interaction output parameter includes one or more of: a friction parameter, a temperature parameter, or a vibration parameter.

7. The method of any of claims 1-6, further comprising rendering a haptic effect according to the interaction output parameter.

8. The method of any of claims 1-7, wherein the model is implemented on a multi layer perceptron.

9. A method comprising:
selecting a plurality of paths over a surface;
selecting a plurality of sample points within each of the plurality of paths, each sample point having at least one corresponding training input parameter;
determining a value of at least one corresponding haptic parameter at each of the sample points along the respective paths; and
training an implicit neural representation model using the training input parameters as inputs and the corresponding haptic parameters as outputs.

10. The method of claim 9, wherein the training input parameter includes one or more of: a position parameter, a direction parameter, a pressure parameter, or a speed parameter.

11. The method of claim 9 or 10, wherein the haptic parameter includes one or more of: a friction parameter, a temperature parameter, or a vibration parameter.

12. The method of any of claims 9-11, wherein the model is implemented on a multi layer perceptron.

13. The method of claim 9, wherein the surface is a real surface, and wherein the values of the haptic parameter are determined by measurements on the real surface.

14. The method of claim 9, wherein the surface is a synthetic surface, and wherein the values of the haptic parameter are calculated from information describing the synthetic surface.

15. An apparatus comprising one or more processors configured to perform the method of any of claims 1-14.
